# EUROPEAN PATENT SPECIFICATION

(11) **EP 4 080 046 B1**
(45) Date of publication and mention of the grant of the patent: **27.11.2024**
(21) Application number: 19956647.2
(22) Date of filing: 16.12.2019
(51) Int. Cl.: F03D 80/50, F03D 17/00, F03D 7/00, G01M 13/02, G01H 1/00, G01M 5/00

(54) **METHOD AND SYSTEM FOR MONITORING HEALTH STATE OF BLADE ROOT FASTENER**
VERFAHREN UND SYSTEM ZUR ÜBERWACHUNG DES GESUNDHEITSZUSTANDES EINES SCHAUFELFUSSBEFESTIGERS
DISPOSITIF ET SYSTÈME DE SURVEILLANCE DE L'ÉTAT DE SANTÉ D'UNE FIXATION DE PIED DE PALE

(43) Date of publication of application: 26.10.2022
(73) Proprietor: Envision Energy Co., Ltd., Jiangyin Wuxi Jiangsu 214443 (CN)
(72) Inventor: JIANG, Wensheng, Jiangyin, Jiangsu 214443 (CN); CHEN, Lin, Wuxi, Jiangsu 214443 (CN); LI, Minghui, Wuxi, Jiangsu 214443 (CN); WANG, Kai, Wuxi, Jiangsu 214443 (CN)
(74) Representative: Winter, Brandl - Partnerschaft mbB
(86) International application number: PCT/CN2019/125611
(87) International publication number: WO 2021/119909

(56) References cited:
- WO-A2-2009/047121
- CN-A- 107 218 180
- CN-A- 109 268 214
- CN-A- 109 973 325
- CN-A- 110 173 399
- KR-B1- 101 358 397
- US-A- 4 751 657
- US-A1- 2011 313 726
- US-A1- 2012 053 851
- US-A1- 2019 078 557

## Description

### TECHNICAL FIELD

The present invention generally relates to the field of wind power generation, in particular, to a method for monitoring the health state of the blade root fastener. Furthermore, the present invention relates to a system for monitoring the health state of the blade root fastener.

### BACKGROUND

In recent years, with the improvement of environmental protection awareness and the policy support of various countries, the field of clean energy has shown a rapid development trend. As a new type of energy, clean energy has the advantages of wide distribution, renewable energy and less environmental pollution compared with traditional fossil fuels. As a representative of clean energy, the application of wind turbines is increasing day by day.

Wind turbine blade is an important component for wind turbine to capture wind energy, and its normal operation is directly related to equipment safety and power generation efficiency. The proper operation of blades and even wind turbines depend on the tight connection of root fasteners such as root bolts. Blade root fastener is an important component for connecting blades to hubs. If the blade root fastener is broken or loosened, it will affect the operating attitude of the blade and reduce the power generation efficiency; in severe cases, it will cause major safety accidents such as blade hitting tower or falling off. Therefore, monitoring the health state of blade root fasteners is of great significance for the efficient and safe operation of wind turbines.

At present, the following schemes are mainly used to monitor the health state of the blade root fastener:
(1) analyzing and processing various signals collected by the sensor of the wind turbine based on machine learning, and building a multi-layer perception model to predict whether the wind turbine is in a fault state and whether the blade root bolt is healthy. This scheme is too complicated, the reliability needs to be verified, and the model depends on the wind turbine configuration, and the transferability is poor.
(2) scanning all the bolts approaching during the pitching process by the non-contact sensor to determine whether the bolt head of the blade root bolt has fallen off. This scheme requires the installation of hardware sensors, which is costly.
(3) using the signals collected by the monitoring probe and the temperature sensor to calculate the bolt pre-tightening force to determine whether the pre-tightening force is in the normal range and whether the bolt is damaged. This scheme requires the installation of hardware sensors, which is costly, and the preload is not directly related to bolt breakage.
(4) using the pressure changes between bolt connecting members to determine whether the bolts are broken or loose. This scheme requires hardware sensors and is costly.
(5) reversely deducting the frequency change of the blades through the vibration signal of the nacelle acceleration sensor, and performing the shutdown protection when the frequency difference of the three blades exceeds the threshold. In this scheme, the signal-to-noise of blade natural vibration in the nacelle vibration signal spectrum is low.

From the limitations of the above schemes, it can be known that there is currently a need for a simpler and more efficient blade root fastener monitoring scheme.

Document US 2019/078557 A1 relates to a method for monitoring the vibrational state of a wind turbine comprising detecting a plurality of acceleration values that represent accelerations wherein a component of the wind turbine is subject to at different respective points in time within a specified time interval, storing the acceleration values in an acceleration data set; generating a sum frequency distribution on the basis of the acceleration data set, comparing a first sum frequency value of the sum frequency distribution with a second sum frequency value of a threshold sum frequency distribution for at least one acceleration value, and outputting a warning signal if the second sum frequency value is greater than the first sum frequency value.

### SUMMARY

It is an object of the present invention to provide a method and system for monitoring the health state of the blade root fastener, by means of which the method and/or the system can determine the health state of the blade root fastener with low cost and high accuracy, thereby improving the operating efficiency and operating safety of the wind turbine.

The present invention is set out in the appended set of claims.

In a first aspect of the present invention, this object is solved by a method for monitoring health state of blade root fastener according to claim 1, the method comprising the following steps:
obtaining a sequence of acceleration signals representing the lateral vibration of the nacelle and a sequence of rotational speed signals representing the rotational speed of the rotor;
analyzing the sequence of acceleration signals and the sequence of rotational speed signals to determine the amplitude of the nacelle at 2-time-frequency of the rotational speed of the rotor; and
determining the health state of the blade root fastener based on the amplitude.

In the context of the present invention, the term "lateral vibration of the nacelle" refers to vibration of the nacelle of the wind turbine in the lateral direction perpendicular or transverse to the vertical direction (for example, at an angle of 70° to 90° to the vertical direction). The term "rotational speed of the rotor" refers to the rotational speed of the rotor of the wind turbine consisting of the blades and the hub. The term "2-time-frequncy of the rotational speed of the rotor" refers to twice of the frequency in Hertz (i.e., times per second) converted from the rotational speed of the rotor (for example, the rotational speed of the rotor in cycles/minute is converted to the rotational speed of the rotor in cycles/second and multiplied by 2 times to get the 2-time-frequency of the rotational speed of the rotor). The term "sequence of signals" refers to a set of values collected at multiple points of time for the signal.

In an extended embodiment of the present invention, the method further comprises the following steps:
filtering the amplitude based on historical amplitude data to remove the influence of abnormal data.

Through this extended embodiment, abnormal data and its influence can be eliminated, thereby improving the monitoring accuracy. For example, a filter can be used to filter out points of abnormal frequency or abnormal amplitude. An abnormal data may be defined as, for example, a difference from a historical average value or a statistical value under a specific condition (such as a specific wind speed) that exceeds, for example, a predetermined threshold, such as 50%, 60%, 70%, etc.

In a preferred embodiment of the present invention, analyzing the sequence of acceleration signals and the sequence of rotational speed signals to determine the amplitude of the nacelle at 2-time-frequncy of the rotational speed of the rotor comprises the following steps:
transforming the acceleration represented by the sequence of acceleration signals from the time domain signal to the angular domain signal of the rotor azimuth according to the rotational speed of the rotor represented by the sequence of rotational speed signals; and
performing a FFT (Fast Fourier Transform) on the angular domain signal, and extracting the amplitude corresponding to 2-time-frequncy of the rotational speed of the rotor as the amplitude of the nacelle at 2-time-frequncy of the rotational speed of the rotor.

Through this preferred embodiment, the amplitude of the nacelle at 2-time-frequncy of the rotational speed of the rotor can be determined accurately and quickly. Herein, by performing the transformation from the time domain to the angular domain and performing the fast Fourier transform on the angular domain signal, the frequency spectrum signal of the vibration of the nacelle can be easily obtained, and thus the amplitude of the nacelle at 2-time-frequncy of the rotational speed of the wind rotor can be quickly obtained.

In a preferred embodiment of the present invention, the method further comprises the following steps:
eliminating background noise due to limited data length of angular domain signals after FFT; and/or
correcting the amplitude corresponding to 2-time-frequncy of the rotational speed of the rotor according to the frequency and/or weight of the tower and the frequency and/or weight of the blade.

Through this preferred embodiment, the background noise can be reduced or eliminated, or the precision of the amplitude of the nacelle at 2-time-frequncy of the rotational speed of the rotor can be improved. Elimination of background noise can be achieved, for example, by passing the fast Fourier transformed signal through a filter with a suitable cut-off frequency, such as a bandpass filter.

In an extended embodiment of the present invention, the blade root fastener comprises one or more of the following: the blade root bolt, the blade root nut, the blade root screw, and the blade root adhesion portion. With this extended embodiment, various blade root fasteners can be detected at low cost and accurately, thereby improving the operational safety of the wind turbine.

In an extended embodiment of the present invention, the method further comprises the following steps:
sending the alarm signal remotely to the user mobile device.

Through this extended embodiment, remote monitoring of blade root fasteners can be realized. For example, a user may install a monitoring application software App on the user's mobile device, which can remotely communicate with the wind turbine (also referred to as "wind power plant") in real time, so that the user can view the health state of the blade root fasteners in real time.

In an extended embodiment of the present invention, determining the health state of the blade root fastener based on the amplitude comprises the following steps:
issuing an alarm signal indicating that maintenance should be performed when the amplitude exceeds the first threshold; and
issuing an alarm signal indicating that the wind turbine should be shut down when the amplitude exceeds the second threshold.

Through this extended embodiment, different countermeasures can be taken according to different fault conditions. For example, when the amplitude exceeds the first threshold but is lower than the second threshold, it means that the falling off or breaking of the bolt does not seriously affect the safety of the wind turbine, such as only one or non-critical bolt falls off or breaks; and when the amplitude exceeds the second threshold, which indicates that multiple or critical bolts have fallen off or broken, which requires immediate shutdown to prevent a safety accident. The second threshold is greater than the first threshold, and the two thresholds may be set according to statistical or empirical data.

In a second aspect of the present invention, the foregoing object is solved by a system for monitoring health state of blade root fastener according to claim 8, the system comprises:
a sensor, which is configured to obtain a sequence of acceleration signals representing the lateral vibration of the nacelle and a sequence of rotational speed signals representing the rotational speed of the rotor; and
a controller, which is configured to perform the following actions:
   analyze the sequence of acceleration signals and the sequence of rotational speed signals to determine the amplitude of the nacelle at 2-time-frequncy of the rotational speed of the rotor; and
   determine the health state of the blade root fastener based on the amplitude.

In a preferred embodiment of the present invention, the sensor is a PCH acceleration sensor. Through this preferred embodiment, the measurement of both acceleration and rotational speed can be conveniently achieved through the same PCH acceleration sensor. At the same time, since the PCH acceleration sensor is installed in most wind turbines, this embodiment can realize the measurement of acceleration and rotation speed without or with very little additional hardware cost.

In an extended embodiment of the present invention, the system further comprises:
a pitch actuator, which is configured to perform a pitch operation based on the health state of the blade root fastener; and/or
a remote communication module, which is configured to remotely transmit the health state of the blade root fastener to the user mobile device.

With this expansion, emergency handling of fault conditions can be realized, such as adjusting the blade attitude by pitch operation, or decelerating or stopping the rotor to avoid accidents; alternatively, remote communication can be implemented so that, for example, the user can be notified remotely. The remote communication module can implement long-distance communication by, for example, a Bluetooth connection, a Wi-Fi connection, a cellular connection, etc. Laser communication or satellite communication are also conceivable. The user mobile device may be, for example, a laptop computer, a tablet computer, a personal digital assistant (PDA), a smartphone, etc.

In an extended embodiment of the present invention, the health state comprises one or more of the following:
whether the blade root fastener falls off;
whether the blade root fastener is broken; and
whether the blade root fastener is loose.

With this extended embodiment, various fastener failure situations can be detected. Other fastener failure conditions are also conceivable under the teachings of the present invention, such as excessive fastener wear, etc.

Furthermore, the invention also relates to a wind turbine with the system according to the invention.

The present invention has at least the following beneficial effects: (1) Through the present invention, it is possible to accurately determine whether a failure of the blade root fastener occurs, which is based on the following insight of the inventor: the inventor found through research that failures such as breaking and loosening of the blade root fastener will cause abnormal changes in blade attitude, such as a reduction in the natural vibration frequency of the blade, which in turn will lead to lateral vibration of the nacelle. Not only that, the inventors have also discovered the specificity of this lateral vibration, specifically, the various lateral vibrations of the nacelle are not all associated with the failure of the blade root fasteners, only the vibration of the nacelle at 2-time-frequncy of the rotational speed of the rotor has a strong correlation with the failure of the blade root fastener. That is to say, the frequency of the lateral vibration of the nacelle caused by the failure of the blade root fastener is exactly the same as twice the frequency of the rotational speed of the rotor. Therefore, by detecting the amplitude of the nacelle at 2-time-frequncy of the rotational speed of the rotor, it can be accurately judged whether the failure of the blade root fastener has occurred. (2) Compared with the prior art, the present invention has the features of simpler calculation, lower hardware cost, more practicability, etc. This is because the present invention only needs to detect acceleration and rotational speed, which can be realized by PCH acceleration, and the calculation process is simple, so the software and hardware of the present invention are low in cost, simple in operation, and strong in practicability.

### BRIEF DESCRIPTION OF THE DRAWINGS

The present invention is further described below with reference to the accompanying drawings in conjunction with specific embodiments.
Fig. 1 shows a schematic diagram of a system according to the invention;
Fig. 2 shows the flow of the method according to the invention; and
Fig. 3 shows an example of a monitoring process according to the present invention.

### DETAILED DESCRIPTION OF THE INVENTION

It should be noted that various components in the various figures may be shown exaggerated for illustration purposes and not necessarily to correct scale. In the various figures, identical or functionally identical components are provided with the same reference numerals.

In the present invention, unless otherwise specified, "arranged on," "arranged over," and "arranged over" do not exclude the case where there is an intermediate between the two. In addition, "arranged on or above" only means the relative positional relationship between two components, and in certain circumstances, such as after reversing the product direction, it can also be converted to "arranged under or below", and vice versa.

In the present invention, each embodiment is only intended to illustrate the solution of the present invention, and should not be construed as limiting.

In the present invention, unless otherwise specified, the quantifiers "a" and "an" do not exclude the scenario of multiple elements.

It should also be pointed out here that, in the embodiments of the present invention, for the sake of clarity and simplicity, only a part of the components or assemblies may be shown, but those of ordinary skill in the art can understand that, under the teaching of the present invention, required parts or components may be added according to specific scenarios.

It should also be pointed out that within the scope of the present invention, the terms "same", "equal" and "equal to" do not mean that the two values are absolutely equal, but allow a certain reasonable error, that is, the phrases also encompass "substantially the same", "substantially equal", "substantially equal to". By analogy, in the present invention, the terms "perpendicular to", "parallel to" and the like in the table direction also encompass the meanings of "substantially perpendicular to" and "substantially parallel to".

In addition, the numbering of the steps of each method of the present invention does not limit the execution order of the method steps. Unless otherwise indicated, the various method steps may be performed in a different order.

In the present invention, the controller may be implemented in software, hardware or firmware or a combination thereof. A controller can exist alone or be part of a component. For example, the controller may be implemented as a discrete hardware module in the wind turbine or as part of the pitch system; or the controller may be implemented as software, such as a software module of a control system of the pitch system or on a local computer or remote server or user mobile device application App.

In view of the limitations of the existing blade root fastener monitoring scheme, such as high monitoring complexity, high hardware cost, and low detection accuracy, the present invention provides a novel method and system for monitoring the health state of the blade root fastener, which can determine the health state of the blade root fastener with low cost and high accuracy, thereby increasing the operating efficiency and operating safety of the wind turbine. In particular, the idea on which the present invention is based is that, the inventor found through research that failures such as breaking and loosening of the blade root fastener will cause abnormal changes in blade attitude, such as a reduction in the natural vibration frequency of the blade, which in turn will lead to lateral vibration of the nacelle. Not only that, the inventors have also discovered the specificity of this lateral vibration, specifically, the various lateral vibrations of the nacelle are not all associated with the failure of the blade root fasteners, only the vibration of the nacelle at 2-time-frequncy of the rotational speed of the rotor has a strong correlation with the failure of the blade root fastener. That is to say, the frequency of the lateral vibration of the nacelle caused by the failure of the blade root fastener is exactly the same as the 2-time-frequency of the rotational speed of the rotor. Therefore, by detecting the amplitude of the nacelle at 2-time-frequncy of the rotational speed of the rotor, it can be accurately judged whether the failure of the blade root fastener has occurred. In addition, the present invention only needs to detect acceleration and rotational speed, and the calculation solution is simple, so the hardware and software costs of the fastener failure detection solution can be better reduced. For example, the present invention can use the PCH sensor that will be installed in the wind turbine, does not need to install additional hardware sensors, has low cost and good versatility. In addition, the solution of the present invention can be installed in the programmable logic circuit PLC of the wind turbine in the form of a software APP to perform stand-alone off-line operation to realize full-time monitoring. Once a fault warning is triggered, the wind turbine will automatically stop for protection. The invention has strict theoretical support behind it, and has a clear directionality for the fracture of the blade root bolt.

The present invention is further described below with reference to the accompanying drawings in conjunction with specific embodiments.

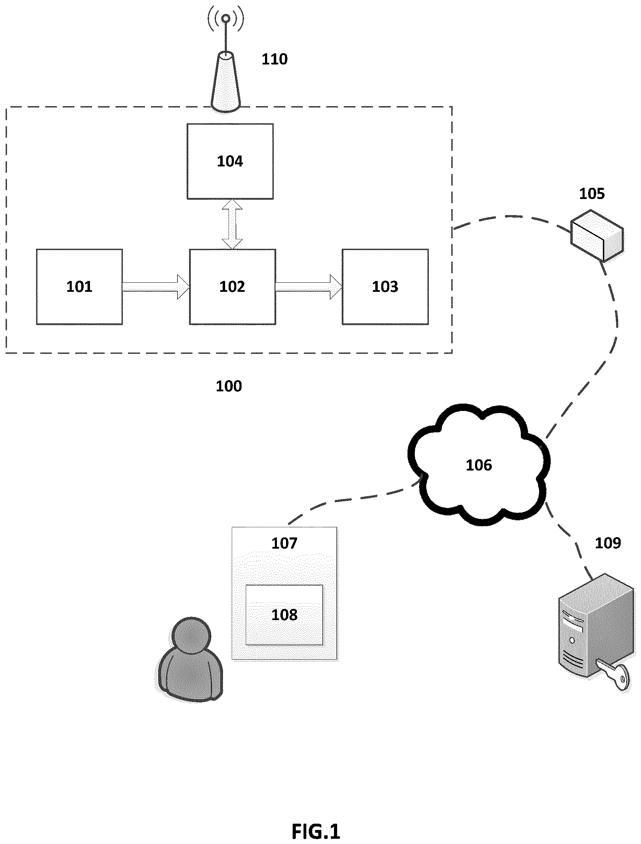

Fig. 1 shows a schematic diagram of a system 100 according to the invention.

First, an exemplary operating environment for the system 100 is set forth. In this embodiment, the system 100 for monitoring the health state of the blade root fastener (or simply "system 100") determines the health state of the blade root fastener through data measurement or data acquisition and data processing, and sends the health state remotely to the user mobile device 107 through the optional relay device 105 and the optional network 106, and then the user can view the health state remotely, for example, on the monitoring application 108 installed on the user mobile device 107 , and performs remote operations such as blade attitude adjustment or shutdown if necessary. The relay device 105 may be, for example, an infrared receiver, a Wi-Fi router, a base station, a communication satellite, etc. The network 106 may be the Internet or an Intranet or other private network. In a preferred embodiment, the system 100 communicates directly with the user mobile device 107 or other control terminal, in this case, the system 100 has a transmitter of corresponding power so that the health state signal can be received by the user mobile device 107 or other control terminal. In a preferred embodiment, a remote server 109 is also provided for authentication of the system 100 and historical data storage. For example, the user must first enter the correct user credentials into the remote server 109 to access the system 100 (for example, by means of a monitoring application 108 installed on the user mobile device 107), thereby obtaining the corresponding health state. The remote server 109 may also store historical health state of the system 100 for statistical or related threshold determination. Additionally, the remote server 109 can also encrypt and decrypt data between the system 100 and the user mobile device 107, thereby increasing security.

In the present invention, the blade root fastener should be understood broadly. For example, the blade root encompasses various fastening devices for connecting blade roots and bolts, such as blade root bolts, blade root nuts, blade root screws, and blade root adhesion parts, etc. Failures such as breakage and loosening of these blade root fasteners will lead to changes in the blade attitude and even lead to safety accidents of the wind turbine.

Further details of the system 100 are set forth next.

As shown in FIG. 1, the system 100 for monitoring the health state of the blade root fastener according to the present invention includes the following components (some of these components are optional):
- the sensor, which is configured to obtain the sequence of acceleration signals representing the lateral vibration of the nacelle and the sequence of rotational speed signals representing the rotational speed of the rotor. The sensor 101 can be, for example, a PCH acceleration sensor installed in the nacelle, which can be used to measure both acceleration and rotational speed. Other types of sensors 101 are also conceivable under the teachings of the present invention, such as rotational speed sensor and displacement sensor. Herein, the term "acceleration signals representing the lateral vibration of the nacelle" refers to the acceleration on the nacelle measurement, since the acceleration is caused by the vibration of the nacelle in lateral direction. In the present invention, the lateral direction of the nacelle refers to the horizontal direction or the direction transverse to the vertical direction (for example, at an angle of 70° to 90° to the vertical direction).
- the controller 102, which is configured to perform the following actions:
   ◇ analyze the sequence of acceleration signals and the sequence of rotational speed signals to determine the amplitude of the nacelle at 2-time-frequncy of the rotational speed of the rotor. This can be achieved, for example, by identifying the magnitude of a particular frequency on the spectrum of the nacelle lateral vibration spectrum. Herein, the sequence of acceleration signals and the sequence of rotational speed signals may, for example, be continuous signals within a certain period of time, and the two may be related in time. For example, the time of the two signals can be recorded in order to associate them with each other, or the two signals can be stored in an array in association with each other. For example, the controller 102 can continuously collect the vibration data and put it into the data sequeue. When the collected data reaches a certain period of time, the signal sequence is analyzed to obtain the amplitude of the nacelle at 2-time-frequncy of the rotational speed of the rotor (2P). After completing an analysis, the data queue is emptied, and then the above collection and analysis operations are repeated. In a preferred embodiment, the amplitude of the nacelle at 2-time-frequncy of the rotational speed of the rotor is determined as follows:
      ✧ transform the acceleration represented by the sequence of acceleration signals from the time domain signal to the angular domain signal of the rotor azimuth according to the rotational speed of the rotor represented by the sequence of rotational speed signals. Herein, the above conversion is performed by the relationship between time and the azimuth angle of the rotor. That is to say, at each moment, the rotor has a corresponding azimuth angle, so that the above transformation is completed by data substitution.
         ✧ perform a FFT on the angular domain signal, and extract the amplitude corresponding to 2-time-frequncy of the rotational speed of the rotor as the amplitude of the nacelle at 2-time-frequncy of the rotational speed of the rotor. Through the fast Fourier transform (FFT), the angle domain signal can be easily transformed into the frequency domain signal, which is beneficial to identify the amplitude of the nacelle at 2-time-frequncy of the rotational speed of the rotor. The fast Fourier transform is a well-known algorithm, so it will not be described herein. In a preferred embodiment, background noise due to limited data length of the angular domain signal after FFT is eliminated. In another preferred embodiment, the amplitude of the nacelle at 2-time-frequncy of the rotational speed of the rotor is corrected according to the frequency and/or weight of the tower, and the frequency and/or weight of the blades. Elimination of background noise can be achieved, for example, by passing the fast Fourier transformed signal through a filter with a suitable cut-off frequency, such as a bandpass filter. In addition, the effects of weather factors such as high winds can be excluded.
            Through the above calculation method, the amplitude of the nacelle at 2-time-frequncy of the rotational speed of the rotor can be determined accurately and quickly. Here, by performing the transformation from the time domain to the angular domain and performing the fast Fourier transform on the angular domain signal, the frequency spectrum signal of the vibration of the nacelle can be easily obtained, so that the amplitude of the nacelle at 2-time-frequncy of the rotational speed of the rotor can be quickly obtained.
   ◇ determine the health state of the blade root fastener based on the amplitude. For example, an alarm signal indicating that maintenance should be performed should be issued when the amplitude exceeds a first threshold, and a shutdown signal indicating that a shutdown should be issued when the amplitude exceeds a second threshold. The first threshold and the second threshold can be determined, for example, based on historical data, such as historical health state data or statistical values or empirical values. Both of these thresholds can be determined theoretically. For example, the relationship between the number of broken bolts of each blade of each turbine and the amplitude of the nacelle at 2-time-frequncy of the rotational speed of the rotor (2P) can be obtained by calculation, so that the alarm threshold of the final 2P amplitude can be determined by determining the number of broken bolts at time of the alarm. This threshold determination process can also be done or improved through machine learning. For example, after each amplitude analysis is completed, the amplitude information is stored for subsequent statistical analysis or threshold setting operations. The historical amplitude information can also be used to filter the acquired signal sequence to avoid misjudgment of data caused by abnormal data. For example, the first threshold may be set to exceed the historical average by 50%-100%, and the second threshold may be set to exceed the historical average by 100%-200%.

The controller 102 may be implemented as a discrete hardware module in the wind turbine or as part of the pitch system; the controller 102 may be implemented as software, such as a software module of a control system of the pitch system, or a local computer or a remote server or an application program on a user mobile device, etc. In the case of hardware implementation, the controller 102 may include, for example, a field programmable logic gate array FPGA, an application specific integrated circuit ASIC, a special purpose processor, etc. In the case of a software implementation, the controller 102 may be implemented as software code stored on a memory, which may be executed by a dedicated or general-purpose processor to perform the described steps.
- the optional remote communication module 104, which is configured to remotely transmit the health state of the blade root fastener to the user mobile device. The remote communication module 104 may be implemented, for example, as a Wi-Fi module, a Bluetooth module, an infrared communication module, a cellular communication module, a transceiver, etc. Herein, through the remote communication module 104, the user can communicate with the system 100 to obtain the health state and issue shutdown or attitude adjustment instructions to the system 100 when necessary. In this embodiment, the remote communication module 104 is connected to the network 106 through the relay device 105 and communicates with the user mobile device 107 through the network 106. However, this is merely exemplary, and in other embodiments, the system 100 may communicate directly with the user mobile device 107 as well. Additionally, the remote communication module 104 may have an antenna 110 for wireless communication with the relay device 105.
- the pitch actuator 103, which is configured to perform a pitch operation based on the health state of the blade root fastener. For example, when the amplitude of the nacelle exceeds the second threshold, the pitch actuator 103 is used to adjust the blade attitude or shut down the wind turbine. In a preferred embodiment, the user can instruct the pitch actuator 103 to perform a pitch operation through the user mobile device 107.

The present invention has at least the following beneficial effects: (1) Through the present invention, it is possible to accurately determine whether the failure of the blade root fastener occurs, which is based on the following insight of the inventor: the inventor found through research that failures such as breaking and loosening of the blade root fastener will cause abnormal changes in blade attitude, such as a reduction in the natural vibration frequency of the blade, which in turn will lead to lateral vibration of the nacelle. Not only that, the inventors have also discovered the specificity of this lateral vibration, specifically, the various lateral vibrations of the nacelle are not all associated with the failure of the blade root fasteners, only the vibration of the nacelle at 2-time-frequncy of the rotational speed of the rotor has a strong correlation with the failure of the blade root fastener. That is to say, the frequency of the lateral vibration of the nacelle caused by the failure of the blade root fastener is exactly the same as the frequency at 2-time-frequncy of the rotational speed of the rotor. Therefore, by detecting the amplitude of the nacelle at 2-time-frequncy of the rotational speed of the rotor, it can be accurately judged whether the failure of the blade root fastener has occurred. (2) Compared with the prior art, the present invention has the characteristics of simpler calculation, lower hardware cost, more practicability, etc. This is because the present invention only needs to detect acceleration and rotational speed, which can be realized by PCH acceleration, and the calculation process is simple, so the software and hardware of the present invention are low in cost, simple in operation, and strong in practicability.

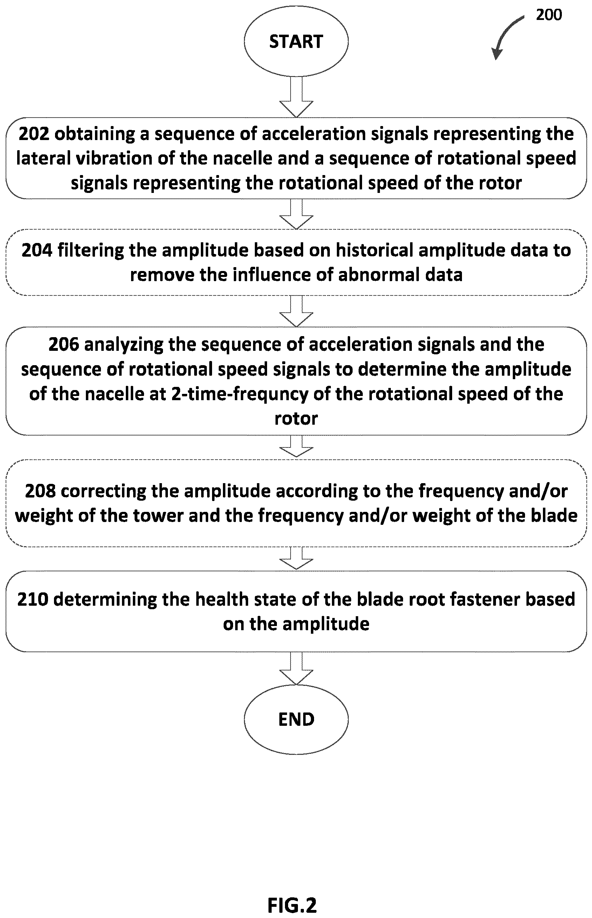

Figure 2 shows the flow of a method 200 according to the present invention, wherein the dashed boxes represent optional steps.

In step 202, obtained is the sequence of acceleration signals representing the lateral vibration of the nacelle and the sequence of rotational speed signals representing the rotational speed of the rotor.

In optional step 204, the amplitude is filtered based on historical amplitude data to remove the effects of abnormal data.

In step 206, the sequence of acceleration signals and the sequence of rotational speed signals are analyzed to determine the amplitude of the nacelle at 2-time-frequncy of the rotational speed of the rotor.

In optional step 208, the amplitude corresponding to 2-time-frequncy of the rotational speed of the rotor is corrected according to the frequency and/or weight of the tower and the frequency and/or weight of the blade.

In step 210, the health state of the blade root fastener is determined based on the amplitude.

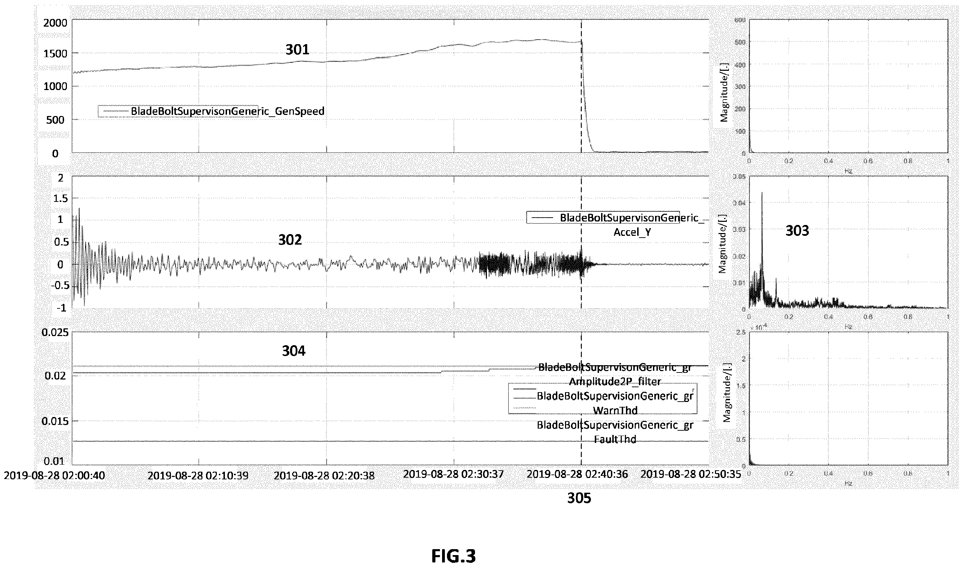

Figure 3 shows an example of a monitoring process according to the present invention.

Curves 301-304 represent the rotational speed of the rotor, the lateral acceleration of the nacelle, the amplitude of the nacelle at 2-time-frequncy of the rotational speed of the rotor, and the alarm signal level, respectively. In this example, at point of time 503, the system 100 detects through curves 301-303 that one or more bolt breaks have occurred, and automatically performs shutdown protection. At the same time, an early warning message is sent to the station, prompting the operation and maintenance personnel to perform maintenance.

While some embodiments of the invention have been described in this document, those skilled in the art will appreciate that these embodiments are shown by way of example only. Numerous modifications, alternatives and improvements will occur to those skilled in the art under the teachings of this invention without departing from the scope of this invention. It is intended that the appended claims define the scope of the invention.

## Claims

1. A method for monitoring health state of a wind turbine blade root fastener, comprising the following steps:
obtaining (202) a sequence of acceleration signals representing the lateral vibration of a nacelle of a wind turbine referring to vibration of the nacelle of the wind turbine in the lateral direction perpendicular or transverse to the vertical direction and a sequence of rotational speed signals representing a rotational speed of the rotor;
analyzing (206) the sequence of acceleration signals and the sequence of rotational speed signals to determine the amplitude of the nacelle at 2-time-frequency of the rotational speed of the rotor referring to twice of the frequency in Hertz converted from the rotational speed of the rotor; and
determining (210) the health state of the blade root fastener based on the amplitude.

2. The method of claim 1, further comprising the following steps:
filtering (204) the amplitude based on historical amplitude data to remove the influence of abnormal data.

3. The method of claim 1, wherein analyzing (206) the sequence of acceleration signals and the sequence of rotational speed signals to determine the amplitude of the nacelle at 2-time-frequency of the rotational speed of the rotor comprises the following steps:
transforming the acceleration represented by the sequence of acceleration signals from the time domain signal to the angular domain signal of the rotor azimuth according to the rotational speed of the rotor represented by the sequence of rotational speed signals; and
performing a Fast Fourier Transform FFT on the angular domain signal, and extracting the amplitude corresponding to 2-time-frequency of the rotational speed of the rotor as the amplitude of the nacelle at 2-time-frequency of the rotational speed of the rotor.

4. The method of claim 3, further comprising the following steps:
eliminating background noise due to limited data length of angular domain signals after FFT; and/or
correcting the amplitude corresponding to 2-time-frequency of the rotational speed of the rotor according to the frequency and/or weight of the tower and the frequency and/or weight of the blade.

5. The method of claim 1, wherein the blade root fastener comprises one or more of the following: blade root bolt, blade root nut, blade root screw, and blade root adhesion portion.

6. The method of claim 1, further comprising the following step:
sending an alarm signal remotely to a user mobile device (107).

7. The method of claim 1, wherein determining the health state of the blade root fastener based on the amplitude comprises the following steps:
issuing an alarm signal indicating that maintenance should be performed when the amplitude exceeds a first threshold; and
issuing an alarm signal indicating that should be shut down when the amplitude exceeds a second threshold.

8. A system (100) for monitoring health state of a wind turbine blade root fastener, **characterized by** comprising:
a sensor (101), which is configured to obtain (202) a sequence of acceleration signals representing the lateral vibration of a nacelle of a wind turbine referring to vibration of the nacelle of the wind turbine in the lateral direction perpendicular or transverse to the vertical direction and a sequence of rotational speed signals representing a rotational speed of the rotor; and
a controller (102), which is configured to perform the following actions:
analyzing (206) the sequence of acceleration signals and the sequence of rotational speed signals to determine the amplitude of the nacelle at 2-time-frequency of the rotational speed of the rotor referring to twice of the frequency in Hertz converted from the rotational speed of the rotor; and
determining (210) the health state of the blade root fastener based on the amplitude.

9. The system (100) of claim 8, further comprising:
a pitch actuator (103), which is configured to perform a pitch operation based on the health state of the blade root fastener; and/or
a remote communication module (104), which is configured to remotely transmit the health state of the blade root fastener to a user mobile device (107).

10. The system (100) of claim 8, wherein the health state comprises one or more of the following:
whether the blade root fastener falls off;
whether the blade root fastener is broken; and
whether the blade root fastener is loose.

11. A wind turbine, comprising the system (100) according to one of claims 8 to 10.

## Patentansprüche

1. Verfahren zur Überwachung eines Gesundheitszustandes einer Windturbine-Blattwurzelbefestigung, das die folgenden Schritte umfasst:
Erhalten (202) einer Sequenz von Beschleunigungssignalen, die eine laterale Vibration einer Gondel einer Windturbine darstellen, die sich auf eine Vibration der Gondel der Windturbine in der lateralen Richtung senkrecht oder quer zur vertikalen Richtung beziehen, und einer Sequenz von Drehzahlsignalen, die eine Drehzahl des Rotors darstellen;
Analysieren (206) der Sequenz von Beschleunigungssignalen und der Sequenz von Drehzahlsignalen, um die Amplitude der Gondel bei einer 2-Zeit-Frequenz der Drehzahl des Rotors zu bestimmen, die sich auf das Doppelte der Frequenz in Hertz bezieht, die aus der Drehzahl des Rotors umgerechnet wird; und
Bestimmen (210) des Gesundheitszustands der Blattwurzelbefestigung basierend auf der Amplitude.

2. Verfahren nach Anspruch 1, das ferner die folgenden Schritte umfasst:
Filtern (204) der Amplitude basierend auf historischer Amplitudendaten, um den Einfluss abnormaler Daten zu entfernen.

3. Verfahren nach Anspruch 1, wobei das Analysieren (206) der Sequenz von Beschleunigungssignalen und der Sequenz von Drehzahlsignalen, um die Amplitude der Gondel bei der 2-Zeit-Frequenz der Drehzahl des Rotors zu bestimmen, die folgenden Schritte umfasst:
Transformieren der durch die Sequenz von Beschleunigungssignalen dargestellten Beschleunigung aus dem Zeitbereichssignal in das Winkelbereichssignal des Rotorazimuts gemäß der Drehzahl des Rotors, die durch die Sequenz von Drehzahlsignalen dargestellt wird; und
Durchführen einer schnellen Fourier-Transformation FFT an dem Winkelbereichssignal, und Extrahieren der Amplitude, die der 2-Zeit-Frequenz der Drehzahl des Rotors entspricht, als die Amplitude der Gondel bei der 2-Zeit-Frequenz der Drehzahl des Rotors.

4. Verfahren nach Anspruch 3, das ferner die folgenden Schritte umfasst:
Beseitigen des Hintergrundrauschens aufgrund begrenzter Datenlänge der Winkelbereichssignale nach der FFT; und/oder
Korrigieren der Amplitude, die der 2-Zeit-Frequenz der Drehzahl des Rotors entspricht, gemäß der Frequenz und/oder dem Gewicht des Turms und der Frequenz und/oder dem Gewicht des Blattes.

5. Verfahren nach Anspruch 1, wobei die Blattwurzelbefestigung Blattwurzelbolzen, und/oder Blattwurzelmutter, und/oder Blattwurzelschraube und/oder Blattwurzelklebeteil aufweist.

6. Verfahren nach Anspruch 1, das ferner den folgenden Schritt umfasst:
Senden eines Alarmsignals aus der Ferne an ein mobiles Benutzergerät (107).

7. Verfahren nach Anspruch 1, wobei das Bestimmen des Gesundheitszustands der Blattwurzelbefestigung basierend auf der Amplitude die folgenden Schritte umfasst:
Ausgeben eines Alarmsignals, das anzeigt, dass eine Wartung durchgeführt werden sollte, wenn die Amplitude einen ersten Schwellenwert überschreitet; und
Ausgeben eines Alarmsignals, das anzeigt, dass die Windturbine abgeschaltet werden sollte, wenn die Amplitude einen zweiten Schwellenwert überschreitet.

8. System (100) zur Überwachung eines Gesundheitszustands einer Windturbine-Blattwurzelbefestigung, **dadurch gekennzeichnet, dass** das System
einen Sensor (101), der so konfiguriert ist, dass er eine Sequenz von Beschleunigungssignalen, die eine laterale Vibration einer Gondel einer Windturbine darstellen, die sich auf eine Vibration der Gondel der Windturbine in der lateralen Richtung senkrecht oder quer zur vertikalen Richtung bezieht, und eine Sequenz von Drehzahlsignalen, die eine Drehzahl des Rotors darstellen, erhält (202); und
einen Controller (102) aufweist, der so konfiguriert ist, dass er die folgenden Aktionen durchführt:
Analysieren (206) der Sequenz von Beschleunigungssignalen und der Sequenz von Drehzahlsignalen, um die Amplitude der Gondel bei einer 2-Zeit-Frequenz der Drehzahl des Rotors zu bestimmen, die sich auf das Doppelte der Frequenz in Hertz bezieht, die aus der Drehzahl des Rotors umgerechnet wird; und
Bestimmen (210) des Gesundheitszustands der Blattwurzelbefestigung basierend auf der Amplitude.

9. System (100) nach Anspruch 8, ferner mit:
einem Neigungsaktuator (103), der so konfiguriert ist, dass er eine Neigungsoperation basierend auf dem Gesundheitszustand der Blattwurzelbefestigung durchführt; und/oder
einem Fernkommunikationsmodul (104), das so konfiguriert ist, dass es den Gesundheitszustand der Blattwurzelbefestigung aus der Ferne an ein mobiles Benutzergerät (107) sendet.

10. System (100) nach Anspruch 8, wobei der Gesundheitszustand Folgendes aufweist:
ob die Blattwurzelbefestigung abfällt; und/oder
ob die Blattwurzelbefestigung gebrochen ist; und/oder
ob die Blattwurzelbefestigung locker ist.

11. Windturbine mit einem System (100) nach einem der Ansprüche 8 bis 10.

## Revendications

1. Procédé de surveillance de l'état de santé d'une fixation de pied de pale d'éolienne, comprenant les étapes suivantes :
l'obtention (202) d'une séquence de signaux d'accélération représentant la vibration latérale d'une nacelle d'une éolienne en référence à la vibration de la nacelle de l'éolienne dans la direction latérale perpendiculaire ou transversale à la direction verticale et d'une séquence de signaux de vitesse de rotation représentant une vitesse de rotation du rotor ;
l'analyse (206) de la séquence de signaux d'accélération et de la séquence de signaux de vitesse de rotation pour déterminer l'amplitude de la nacelle à une fréquence de 2 fois la vitesse de rotation du rotor en référence à deux fois la fréquence en Hertz convertie à partir de la vitesse de rotation du rotor ; et
la détermination (210) de l'état de santé de la fixation de pied de pale en fonction de l'amplitude.

2. Procédé selon la revendication 1, comprenant en outre les étapes suivantes :
le filtrage (204) de l'amplitude en fonction de données d'amplitude historiques pour supprimer l'influence de données anormales.

3. Procédé selon la revendication 1, dans lequel l'analyse (206) de la séquence de signaux d'accélération et de la séquence de signaux de vitesse de rotation pour déterminer l'amplitude de la nacelle à une fréquence de 2 fois la vitesse de rotation du rotor comprend les étapes suivantes :
la transformation de l'accélération représentée par la séquence de signaux d'accélération du signal du domaine temporel au signal du domaine angulaire de l'azimut du rotor en fonction de la vitesse de rotation du rotor représentée par la séquence de signaux de vitesse de rotation ; et
la réalisation d'une transformée de Fourier rapide FFT sur le signal de domaine angulaire, et l'extraction de l'amplitude correspondant à 2 fois la fréquence de la vitesse de rotation du rotor comme l'amplitude de la nacelle à 2 fois la fréquence de la vitesse de rotation du rotor.

4. Procédé selon la revendication 3, comprenant en outre les étapes suivantes :
l'élimination du bruit de fond dû à une longueur limitée de données de signaux de domaine angulaire après FFT ; et/ou
la correction de l'amplitude correspondant à 2 fois la fréquence de la vitesse de rotation du rotor en fonction de la fréquence et/ou du poids de la tour et de la fréquence et/ou du poids de la pale.

5. Procédé selon la revendication 1, dans lequel la fixation de pied de pale comprend un ou plusieurs des éléments suivants : un boulon de pied de pale, un écrou de pied de pale, une vis de pied de pale et une partie d'adhérence de pied de pale.

6. Procédé selon la revendication 1, comprenant en outre l'étape suivante :
l'envoi d'un signal d'alarme à distance à un dispositif mobile d'utilisateur (107).

7. Procédé selon la revendication 1, dans lequel la détermination de l'état de santé de la fixation de pied de pale en fonction de l'amplitude comprend les étapes suivantes :
l'émission d'un signal d'alarme indiquant qu'une maintenance doit être réalisée lorsque l'amplitude dépasse un premier seuil ; et
l'émission d'un signal d'alarme indiquant qu'elle doit être arrêtée lorsque l'amplitude dépasse un second seuil.

8. Système (100) de surveillance de l'état de santé d'une fixation de pied de pale d'éolienne, **caractérisé en ce qu'**il comprend :
un capteur (101), qui est configuré pour obtenir (202) une séquence de signaux d'accélération représentant la vibration latérale d'une nacelle d'une éolienne en référence à la vibration de la nacelle de l'éolienne dans la direction latérale perpendiculaire ou transversale à la direction verticale et une séquence de signaux de vitesse de rotation représentant une vitesse de rotation du rotor ; et
un dispositif de commande (102), qui est configuré pour réaliser les actions suivantes :
l'analyse (206) de la séquence de signaux d'accélération et de la séquence de signaux de vitesse de rotation pour déterminer l'amplitude de la nacelle à une fréquence de 2 fois la vitesse de rotation du rotor en référence à deux fois la fréquence en Hertz convertie à partir de la vitesse de rotation du rotor ; et
la détermination (210) de l'état de santé de la fixation de pied de pale en fonction de l'amplitude.

9. Système (100) selon la revendication 8, comprenant en outre :
un actionneur de pas (103), qui est configuré pour réaliser une opération de pas en fonction de l'état de santé de la fixation de pied de pale ; et/ou
un module de communication à distance (104), qui est configuré pour transmettre à distance l'état de santé de la fixation de pied de pale à un dispositif mobile d'utilisateur (107).

10. Système (100) selon la revendication 8, dans lequel l'état de santé comprend un ou plusieurs des éléments suivants :
si la fixation de pied de pale tombe ;
si la fixation de pied de pale est cassée ; et
si la fixation de pied de pale est desserrée.

11. Éolienne, comprenant le système (100) selon l'une des revendications 8 à 10.
